# EUROPÄISCHE PATENTANMELDUNG

(11) **EP 1 721 724 A1**
(43) Veröffentlichungstag der Anmeldung: **15.11.2006**
(21) Anmeldenummer: 06113445.8
(22) Anmeldetag: 03.05.2006
(51) Int. Cl.: B29C 49/72, B26D 7/01

(54) **Vorrichtung zur Bearbeitung einer umgeformten Thermoplastplatte**

(30) Priorität: 09.05.2005 DE 102005022004
(71) Anmelder: GEISS Aktiengesellschaft, 96145 Sesslach (DE)
(72) Erfinder: Geiss, Manfred, 96145, Seßlach (DE)
(74) Vertreter: Peckmann, Ralf

(57) **Zusammenfassung**

Für das Heraustrennen von Formteilen aus einer umgeformten Thermoplastplatte ohne spezielle Fräsaufnahmen und ohne zeitaufwändiges Beseitigen von Spänen nach jeder Bearbeitung macht die Erfindung eine Bearbeitungsvorrichtung 10 verfügbar, die aus einer mehrachsigen Bearbeitungsmaschine 11 mit wenigstens einem Bearbeitungswerkzeug 12 und einem Bearbeitungstisch 17 für die umgeformte und wenigstens ein zu bearbeitendes Formteil 14 aufweisende Thermoplastplatte 13 besteht, wobei der Bearbeitungstisch 17 zur haltenden Aufnahme der umgeformten Thermoplastplatte 13 und zur gleichzeitigen Beseitigung anfallender Späne eine unterseitige Absaugeinrichtung 20 sowie in seiner Tischfläche Absaugöffnungen 21 aufweist.

## Beschreibung

Die Erfindung betrifft eine Vorrichtung zur Bearbeitung einer umgeformten Thermoplastplatte zum Heraustrennen von mindestens einem Formteil, wobei die Vorrichtung aus einer mehrachsigen Bearbeitungsmaschine mit wenigstens einem Bearbeitungswerkzeug sowie einem Bearbeitungstisch für die umgeformte und wenigstens ein zu bearbeitendes Formteil aufweisende Thermoplastplatte besteht.

Für die Herstellung thermoplastischer Formteile werden üblicherweise Thermoformmaschinen oder Vakuumformmaschinen verwendet, in denen eine vorzugsweise rechteckige Thermoplastplatte einer Verformung zur Herstellung der Formteile unterworfen wird. Nach dem Verlassen der Vakuumformmaschine liegt dann eine Thermoplastplatte mit wenigstens einem Abschnitt vor, in dem das Formteil gebildet ist, und dieses Formteil muss dann in einem nachfolgenden Bearbeitungsschritt entfernt werden, insbesondere herausgetrennt werden. Hierzu wird üblicherweise eine mehrachsige Bearbeitungsmaschine mit wenigstens einem Bearbeitungswerkzeug, wie beispielsweise eine Drei-Achsen-Fräsmaschine, eingesetzt.

Des weiteren ist es im Zusammenhang mit dem Heraustrennen von Formteilen bekannt, ein Sägeblatt in einer vertikalen Spindel der Fräsmaschine einzusetzen, um ein möglichst gratarmes Beschneiden durchführen zu können. Derartige Fräsmaschinen benötigen jedoch für jedes Formteil eine spezielle Fräsaufnahme, wobei jedes Frästeil entsprechend für die Bearbeitung auf die jeweilige Fräsaufnahme gespannt werden muss. Hinzu kommt, dass beim Fräsen Späne anfallen, die in die Fräsaufnahme eintreten können und eine exakte Bearbeitung des Formteils beeinträchtigen können. Falls Bearbeitungsspäne ohne Einfluss bleiben sollen, müssen sie nach jedem Bearbeitungsvorgang eines Formteils in einem separaten Schritt beseitigt werden, was die Produktion von Formteilen verzögert und verteuert.

Der Erfindung liegt demgemäß die Aufgabe zugrunde, eine Vorrichtung der eingangs genannten Gattung verfügbar zu machen, die ein Heraustrennen bzw. Bearbeiten von Formteilen ohne spezielle Fräsaufnahmen und ohne ein zeitaufwändiges Beseitigen von Spänen nach jeder Bearbeitung ermöglicht.

Erfindungsgemäß wird diese Aufgabe durch die im Anspruch 1 genannten Merkmale gelöst.

Bevorzugte Merkmale, die die Erfindung vorteilhaft weiterbilden, sind den nachgeordneten Ansprüchen zu entnehmen.

In vorteilhafter Weise macht die Erfindung demgemäß eine Vorrichtung zur Bearbeitung einer umgeformten Thermoplastplatte für das Heraustrennen von mindestens einem Formteil verfügbar, die aus einer mehrachsigen Bearbeitungsmaschine mit wenigstens einem Bearbeitungswerkzeug sowie einem Bearbeitungstisch für die umgeformte und wenigstens ein zu bearbeitende Formteil aufweisende Thermoplastplatte besteht, wobei der Bearbeitungstisch zur haltenden Aufnahme der umgeformten Thermoplastplatte und zur gleichzeitigen Beseitigung anfallender Späne eine Absaugeinrichtung aufweist.

Durch die erfindungsgemäße Lösung wird somit eine Späneabsaugung eingesetzt, die gleichzeitig dazu dient, die umgeformte Thermoplastplatte und auch einzelne Formteile auf dem Bearbeitungstisch festzuhalten. Dabei übernimmt die Späneabsaugung vorteilhaft auch die Funktion der Fräsaufnahme für jedes einzelne Formteil, das für die Bearbeitung jetzt nur noch mit seinem Formteilrand aufliegt und mit Unterdruck sicher gehalten wird.

In günstiger Weise wird gleichzeitig auch eine wirkungsvolle Späneabsaugung erreicht, mit der verhindert wird, dass die Fräsmaschine in die Vakuumformmaschine verbracht werden und/oder den Bearbeitungsprozess in einer die Genauigkeit der Herstellung beeinträchtigenden Weise beeinträchtigt wird.

Gemäß einer bevorzugten Ausgestaltung der Erfindung sind in dem Bearbeitungstisch Absaugöffnungen gebildet, die vorzugsweise als Durchgangsbohrungen ausgebildet sind, jedoch auch durch den Tisch verlaufende Langlöcher oder Öffnungen mit beliebiger geometrischer Form sein können. Überdies kann der Bearbeitungstisch auch unterschiedliche einzelne oder/und gruppenweise oder/und musterartig angeordnete unterschiedliche Öffnungen aufweisen.

Die für die Erzeugung der Haltekraft und der späneabsaugenden Wirkung vorgesehene Absaugeinrichtung kann innerhalb oder außerhalb der Bearbeitungsvorrichtung angeordnet sein, beispielsweise in einem Abschnitt einer vorgeschalteten Beschickungsmaschine. Gemäß einer bevorzugten Ausgestaltung der Erfindung ist die Absaugeinrichtung unterhalb des Bearbeitungstisches angeordnet, wodurch sich nicht nur ein kompakter Aufbau der gesamten Bearbeitungsvorrichtung ergibt, sondern auch kurze und verlustarme Saugwege resultieren, wobei die Anordnung bevorzugt so getroffen ist, dass an dem Bearbeitungstisch gegebenenfalls bis auf einen Randbereich annähernd gleichmäßige Absaugverhältnisse bzw. Absaugdrücke vorliegen. Da am Randbereich überwiegend unverformte Thermoplastplattenabschnitte größerflächig aufliegen, kann hier ein geringerer Ansaugdruck der Absaugeinrichtung genügen.

Gemäß einer weiteren vorteilhaften Ausgestaltung weist die Vorrichtung für das Beaufschlagen der Seitenränder der Thermoplastplatte einen sogenannten Halte- oder Spannrahmen auf, durch den ein Zentrieren der Formteile und bedarfsweise ein zusätzliches Festhalten ermöglicht wird. Der Spannrahmen ist bevorzugt für das Beschicken des Bearbeitungstisches und das Entfernen herausgetrennter Formteile vertikal vom Bearbeitungstisch verfahrbar. Bevorzugt ist der Spannrahmen in seiner Größe verstellbar und kann dadurch an unterschiedliche Plattengrößen und/oder Zentrierbedingungen und/oder Haltebedürfnisse angepasst werden.

Für das Ausrichten der umgeformten Thermoplastplatte weist der Spannrahmen weiterhin nach einer bevorzugten weiteren Ausgestaltung eine Zentriereinrichtung auf, welche vorzugsweise wenigstens zwei Aufnahmen für an der Thermoplastplatte angeformte Zentrierelemente, vorzugsweise Zentrierkegel, aufweist. Ferner besitzt jeder Ordner bevorzugt wenigstens einen Abschnitt für ein zusätzliches Festhalten der Thermoplastplatte bzw. wenigstens eines Formteils, um einen zusätzlichen Haltebedarf auf dem Bearbeitungstisch Rechnung zu tragen.

Die Bearbeitungsvorrichtung besitzt nach einer weiteren bevorzugten Ausgestaltung der Erfindung für das vertikale Heraustrennen wenigstens eines Formteils aus der umgeformten Thermoplastplatte als Bearbeitungswerkzeug wenigstens ein Stanzwerkzeug, während für das annähernd gratfreie horizontale Heraustrennen wenigstens eines Formteils aus der umgeformten Thermoplastplatte als Bearbeitungswerkzeug ein Sägeblatt vorgesehen ist.

Die erfindungsgemäße Bearbeitungsvorrichtung kann als einzelne Bearbeitungsstation eingesetzt werden. Gemäß einer bevorzugten Ausgestaltung der Erfindung ist die Anordnung jedoch so getroffen, dass der Vorrichtung eine Beschichtungsmaschine zugeordnet ist, durch die umgeformte Thermoplastplatten einzeln zu dem Bearbeitungstisch übergebbar sind, wobei die Zuordnung funktionell oder bevorzugt mit einer Anbindung von Gehäusen der Beschickungsmaschine und der Bearbeitungsvorrichtung und einer abgestimmten Steuerung der bevorzugten taktweisen Beschickung und der heraustrennenden Bearbeitung vorgesehen ist, bei der umgeformte Thermoplastplatten einzeln zu dem Bearbeitungstisch übergeben werden.

Für das Transferieren der umgeformten Thermoplastplatte zu dem Bearbeitungstisch ist bevorzugt in der Beschickungsvorrichtung eine Übergabeeinrichtung vorgesehen, welche vorzugsweise einen Übergabeschieber aufweist.

Gemäß einer weiteren bevorzugten Ausgestaltung ist zudem vorgesehen, dass die erfindungsgemäße Bearbeitungsvorrichtung über die Beschickungsmaschine funktionell und gehäusemäßig mit einer Thermoformmaschine so verbunden ist, dass ein automatischer Ablauf mit koordinierter Beschickung und Bearbeitung ermöglicht wird.

Nachfolgend wird die Erfindung unter Bezugnahme auf die beigefügten Zeichnungen näher erläutert. Es zeigen:
- Fig. 1: eine schematisierte Seitenansicht einer Bearbeitungsvorrichtung gemäß der Erfindung;

- Fig. 2: eine Draufsicht auf die Bearbeitungsvorrichtung gemäß Fig. 1, wobei jedoch die Frässpindel weggelassen wurde; und
- Fig. 3: eine Anordnung aus einer Bearbeitungsmaschine, einer Beschickungsmaschine und einer Thermoformmaschine in einem Aufbau als Einheit.

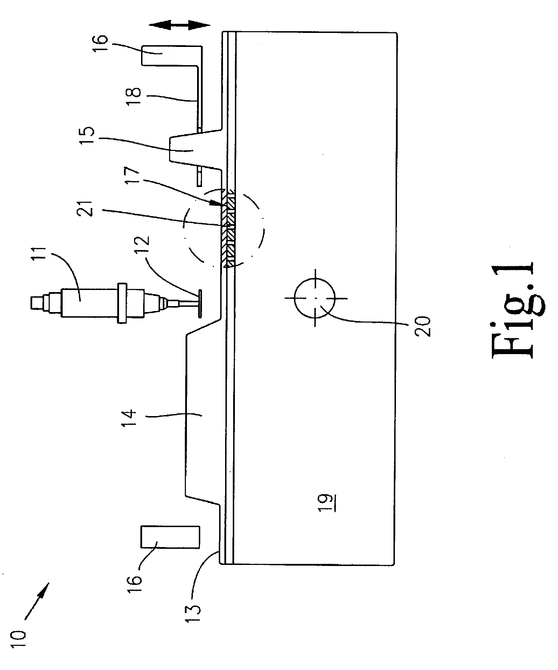

In Fig. 1 sind in einer Seitenansicht schematisch Teile der Bearbeitungsvorrichtung 10 dargestellt. Von einer mehrachsigen Bearbeitungsmaschine wurde zur Vereinfachung nur eine Frässpindel 11 mit einem Sägeblatt 12 als Werkzeug gezeigt. Unterhalb der Frässpindel 11 befindet sich eine Thermoplastplatte 13, in der ein Formteil 14, das aus der Platte 13 in Fig. 1 nach oben vorsteht und durch Thermoverformung hergestellt worden ist, sowie ein Zentrierkegel 15 gezeigt sind.

Randseitig ist die Thermoplastplatte 13 mittels eines vertikal verfahrbaren Spannrahmens 16 auf einem Bearbeitungstisch 17 fixierbar, wobei der Spannrahmen 16 für jeden Zentrierkegel 15 eine Zentriereinrichtung 18 mit einer Aufnahme besitzt, welche auch für ein zusätzliches Festhalten der Thermoplastplatte bzw. wenigstens eines Formteils vorgesehen ist.

Unterhalb des Bearbeitungstisches 17 ist ein seitlich und nach unten geschlossenes Gehäuse 19 angeordnet, aus dessen Inneren bei 20 Späne von einer separaten Absaugeinrichtung abgesaugt werden können. Alternativ kann die nicht dargestellte Absaugeinrichtung auch im Inneren des Gehäuses 19 angeordnet sein.

Der Bearbeitungstisch 17 besitzt auf seiner Oberfläche Durchgangslöcher 21, die im vorliegenden Ausführungsbeispiel als Durchgangsbohrungen ausgebildet sind und sich gleichmäßig verteilt über die gesamte Oberfläche des Bearbeitungstisches erstrecken, um Ansaugdruck auf die darüber liegende Thermoplastplatte 13 aufzubringen.

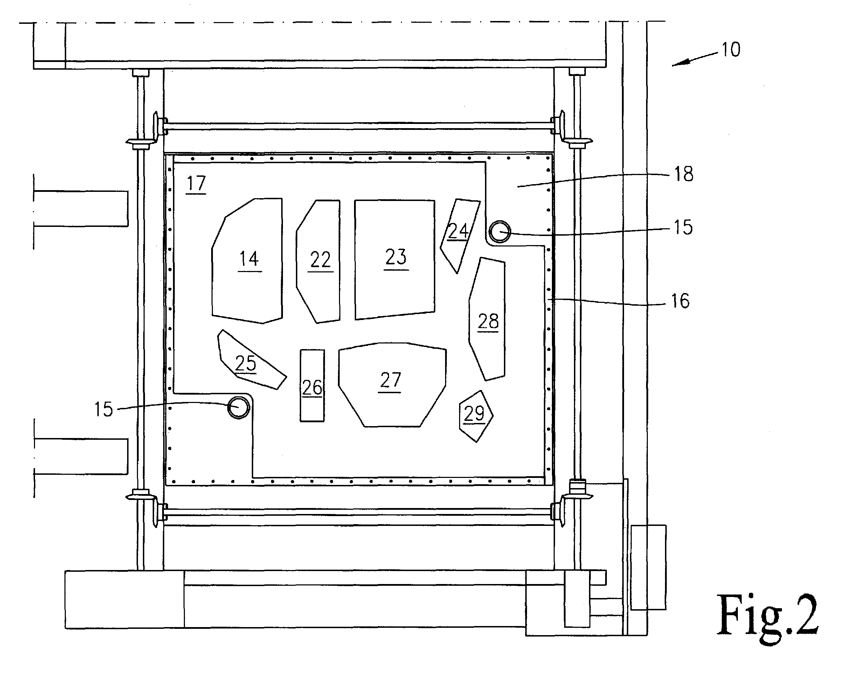

Fig. 2 zeigt eine teilschematisierte Ansicht des Bearbeitungstisches 19 von oben, wobei die Spindel 11 und das Bearbeitungswerkzeug 12 weggelassen worden sind und gut die Thermoplastplatte 13 mit den darin ausgeformten Formteilen zu erkennen ist. Neben dem Formteil 14 sind auch mehrere andere Formteile 22 bis 29 zu erkennen, die unterschiedlich gestaltet sind.

In Fig. 2 ist weiterhin erkennbar, dass der Spannrahmen 16 in seinem Format einstellbar ist. Weiterhin sind Vorrichtungsteile der Bearbeitungsvorrichtung angedeutet, die für die Steuerung der Bearbeitung und für die Anbindung an eine Beschickungsmaschine (in Fig. 2 links) vorgesehen sind.

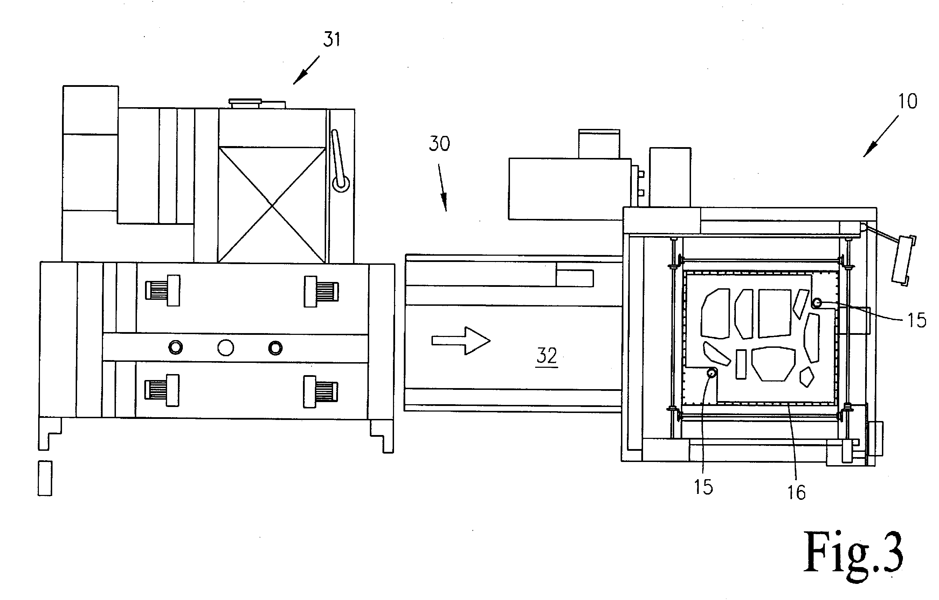

In Fig. 3 ist in verkleinerter Darstellung die Bearbeitungsvorrichtung 10 in konstruktiver und funktioneller Verknüpfung mit einer Beschickungsmaschine 30 und einer Thermoformmaschine 31 dargestellt. Die Anordnung ist dabei so getroffen, dass die Gehäuse der Bearbeitungsvorrichtung, der Beschickungsmaschine und der Thermoformmaschine in dieser Reihenfolge miteinander verbunden sind und entsprechend der Herstellung der umgeformten Thermoplastplatten taktweise zusammenarbeiten. Hierbei wird eine umgeformte Thermoplastplatte aus der Thermoformmaschine 31 mittels der Beschickungsmaschine 30 entnommen und über einen Schieber 32 der Bearbeitungsvorrichtung zum Heraustrennen der in der umgeformten Thermoplastplatte 17 gebildeten Formteile 14, 22 bis 29 transportiert.

## Patentansprüche

1. Vorrichtung zur Bearbeitung einer umgeformten Thermoplastplatte (17) zum Heraustrennen von mindestens einem Formteil (14), bestehend aus
einer mehrachsigen Bearbeitungsmaschine (11) mit wenigstens einem Bearbeitungswerkzeug (12), und
einem Bearbeitungstisch (17) für die umgeformte und wenigstens ein zu bearbeitendes Formteil (14) aufweisende Thermoplastplatte (13),
**dadurch gekennzeichnet, dass** der Bearbeitungstisch (17) zur haltenden Aufnahme der umgeformten Thermoplastplatte (13) und zur gleichzeitigen Beseitigung anfallender Späne eine Absaugeinrichtung (20) aufweist.

2. Vorrichtung nach Anspruch 1, **dadurch gekennzeichnet, dass** der Bearbeitungstisch (17) Absaugöffnungen (21) aufweist.

3. Vorrichtung nach Anspruch 1 oder 2, **dadurch gekennzeichnet, dass** die Absaugeinrichtung (20) unterhalb des Bearbeitungstisches (17) angeordnet ist.

4. Vorrichtung nach einem der vorangehenden Ansprüche, **dadurch gekennzeichnet, dass** für die Seitenränder der Thermoplastplatte (13) ein vorzugsweise in seiner Größe verstellbarer Spannrahmen (16) vorgesehen ist.

5. Vorrichtung nach Anspruch 4, **dadurch gekennzeichnet, dass** der Spannrahmen (16) für das Beschicken des Bearbeitungstisches (17) und für das Entfernen herausgetrennter Formteile (14, 22 - 29) vertikal vom Bearbeitungstisch (17) verfahrbar ist.

6. Vorrichtung nach Anspruch 4 oder 5, **dadurch gekennzeichnet, dass** der Spannrahmen (16) eine Zentriereinrichtung (18) für das Ausrichten der umgeformten Thermoplastplatte (13) aufweist.

7. Vorrichtung nach Anspruch 6, **dadurch gekennzeichnet, dass** die Zentriereinrichtung wenigstens zwei Aufnahmen für an der Thermoplastplatte (13) angeformte Zentrierelemente (15) aufweist.

8. Vorrichtung nach Anspruch 7, **dadurch gekennzeichnet, dass** jede Aufnahme wenigstens einen Abschnitt für ein zusätzliches Festhalten der Thermoplastplatte (13) bzw. wenigstens eines Formteils (14) aufweist.

9. Vorrichtung nach einem der vorangehenden Ansprüche, **dadurch gekennzeichnet, dass** für das vertikale Heraustrennen wenigstens eines Formteils (14) aus der umgeformten Thermoplastplatte (13) als Bearbeitungswerkzeug wenigstens ein Stanzwerkzeug vorgesehen ist.

10. Vorrichtung nach einem der Ansprüche 1 bis 8, **dadurch gekennzeichnet, dass** für das annähernd gratfreie horizontale Heraustrennen wenigstens eines Formteils aus der umgeformten Thermoplastplatte (13) als Bearbeitungswerkzeug ein Sägeblatt (12) vorgesehen ist.

11. Vorrichtung nach einem der vorangehenden Ansprüche, **dadurch gekennzeichnet, dass** der Vorrichtung eine Beschickungsmaschine (30) zugeordnet ist, durch die umgeformte Thermoplastplatten (13) einzeln zu dem Bearbeitungstisch (17) übergebbar sind.

12. Vorrichtung nach Anspruch 10, **dadurch gekennzeichnet, dass** die Beschickungsvorrichtung (30) eine Übergabeeinrichtung (32) aufweist.

13. Vorrichtung nach Anspruch 12, **dadurch gekennzeichnet, dass** die Übergabeeinrichtung (32) einen Übergabeschieber aufweist.

14. Vorrichtung nach einem der Ansprüche 11 bis 13, **dadurch gekennzeichnet, dass** die Vorrichtung (10) über die Beschickungsmaschine (30) mit einer Thermoformmaschine (31) verbunden ist.
